(19) Europäisches Patentamt
European Patent Office
Office européen des brevets

(11) **EP 0 769 880 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.$^7$: **H04N 9/83**

(21) Anmeldenummer: **96116379.7**

(22) Anmeldetag: **12.10.1996**

(54) **Verfahren und Vorrichtung zur Erzeugung des Decodierungs-Taktes von digitalen Datenelementen**

Procedure and arrangement for producing the decoding time of digital data elements

Procédé et dispositif pour engendrer le rythme de décodage d'éléments de données numériques

(84) Benannte Vertragsstaaten:
**DE FR GB IT**

(30) Priorität: **20.10.1995 DE 19539069**

(43) Veröffentlichungstag der Anmeldung:
**23.04.1997 Patentblatt 1997/17**

(73) Patentinhaber: **THOMSON multimedia**
**92648 Boulogne Cédex (FR)**

(72) Erfinder: **Plantholt, Martin**
**65549 Limburg (DE)**

(74) Vertreter: **Hartnack, Wolfgang, Dipl.-Ing. et al**
**Deutsche Thomson-Brandt GmbH**
**European Patent Operations**
**Karl-Wiechert-Allee 74**
**30625 Hannover (DE)**

(56) Entgegenhaltungen:
**EP-A- 0 616 469          EP-A- 0 668 704**

**Beschreibung**

Die Erfindung betrifft ein Verfahren und eine Vorrichtung zur Decodierung und Messung von Statusbitinformationen für die Aufzeichnung und/oder Wiedergabe von Fernsehsignalen, deren Eigenarten (Bildseitenverhältnis, Kamera-/Filmaufnahme, etc.) durch WSS-Informationen angegeben werden.

Stand der Technik

Mit den Entwicklungsarbeiten zur Übertragung, Aufzeichnung und Wiedergabe von Bildsignalen im Breitbildformat 16:9 wurde die Signalisierung dieses Bildformates und anderer Signaleigenschaften notwendig, um darauf ausgerichtete Signalverarbeitungen bei Aufzeichnung und Wiedergabe zu initialisieren. Das European Telecommunications Standard Institute (ETSI) hat mit seinem Final Draft im Juni 1994 diese Signalisierung festgeschrieben (ETSI, prETS 300 294: Television systems; 625-Line television, WIDE SCREEN SIGNALLING (WSS)). Die Statusbitinformationen werden in der ersten Hälfte der Zeile 23 übermittelt und stehen somit einmal pro Vollbild zur Verfügung.

Innerhalb der PALplus-Entwicklungsaktivitäten hat sich eine Arbeitsgruppe mit der Aufzeichnung von PALplus-Signalen auf Heim-Videorecordern (z.B. VHS, S-VHS) befaßt. Diese Arbeitsgruppe hat in einem Draft (PALplus VCR-Standard, Oktober. 1994; PALplus VCR working group) festgelegt, daß bei der Aufzeichnung von PALplus-Signalen die Statusbitinformationen neu geschrieben werden.

Somit müssen sowohl 16:9-Wiedergabegeräte als auch Aufzeichnungsgeräte in der Lage sein, WSS-Informationen zu decodieren und entsprechende Signalverarbeitungen einzuleiten. Berücksichtigt man die Markt-Einführung von pre-recorded Software mit 16:9-Breitbildsignalen (z.B. bespielte Cassetten mit Filmen in PALplus-Codierung), dann wird an Aufzeichnungsgeräte und Wiedergabegeräte die Forderung gestellt, ein Breitbildsignal mit WSS-Informationen mindestens einer ersten Aufzeichnungsgeneration decodieren und verarbeiten zu können. Damit muß ein WSS-Decoder in der Lage sein, auch jitterbehaftete Signale zu verarbeiten.

Erfindung

Der Erfindung liegt die Aufgabe zugrunde, ein Verfahren zur Erzeugung des Decodierungs-Taktes von digitalen Datenelementen anzugeben, das insbesondere die Verarbeitung von auf Videorecordern aufgezeichneten Signalen mit WSS-Information berücksichtigt und im Hinblick auf den Einsatz in Konsumergeräten aufwandgünstig zu realisieren ist. Diese Aufgabe wird durch das in Anspruch 1 angegebene Verfahren gelöst.
Der Erfindung liegt die weitere Aufgabe zugrunde, eine Vorrichtung zur Anwendung des erfindungsgemäßen Verfahrens anzugeben. Diese Aufgabe wird durch die in Anspruch 6 angegebene Vorrichtung gelöst.
In dem Draft des European Telecommunication Standards Institute werden die Statusbits, ihre Codierung und Lage innerhalb der Zeile 23 spezifiziert. Die Grundtaktfrequenz, von der sich die Datenelemente ableiten, beträgt 5MHz, wobei eine Zeilenverkopplung nicht vorgesehen ist. Die Dauer eines Datenelementes beträgt 6*(1/5MHz) = 1.2μs. Die Codierung der Daten erfolgt gleichspannungsfrei im Biphase-L-Code. Es ergibt sich somit für die Taktfrequenz zur Decodierung der Daten ein Wert von 1/1.2μs = 833.33kHz (genau: 833.$\bar{3}$ kHz). Die Lage des Datenpaketes wird mit einer ±250ns-Toleranz - gemessen von der fallenden Flanke des Zeilensynchronimpulses - spezifiziert.
Bei Aufzeichnung des Datenpaketes auf Heim-Videorecordern (VHS, S-VHS) erlaubt der Draft der PALplus-VCR Working Group einen zeitlichen Versatz zwischen dem Datenpaket des ankommenden Signals und dem Aufzeichnungssignal von ±1μs, so daß sich bezüglich der fallenden Syncflanke ein Toleranzbereich von ±1250ns ergibt. Ähnliches ist auch für andere Aufzeichnungsmedien wie z.B. Laserdiscs anwendbar. Zur Synchronisierung des empfangsseitigen Decodertaktes werden nach dem ETSI-Draft Run-In-Informationen und Start-Code-Informationen den eigentlichen Datenbits vorangestellt. Der Run-In besteht aus vier Perioden der Decodertaktfrequenz von 833.33kHz. Da die Zeile 23 mit Vollbildperiodizität auftritt, steht diese Run-In-Information nur einmal innerhalb von 40ms zur Verfügung.

Prinzipiell läßt sich hierauf eine PLL-Schaltung (phase locked loop) synchronisieren, die aus der Run-In-Information einen frequenz- und phasensynchronen Decodertakt bereitstellt. Aufgrund der Systemspezifikationen ergibt sich schon von Vollbild zu Vollbild ein Phasenversatz von 400ns im Decodertakt, der sich aus dem Verhältnis der Decodertaktfrequenz zur Vollbildwechselfrequenz erklärt. Die PLL-Schaltung müßte in der Lage sein, diesen Versatz bis zum Einsatz der eigentlichen Daten auszuregeln. Hierbei sind zufällige Phasenlagen aufgrund einer Aufzeichnung auf Recordermitteln noch nicht berücksichtigt.

Eine derartige PLL-Schaltung ist nur mit großem Aufwand zu realisieren und bietet sich für den Einsatz in Konsumergeräten nicht an.
Eine vorteilhafte Lösung ergibt sich, wenn der Decodertakt mit dem Datenpaket der Zeile 23 verkoppelt wird. Dies läßt sich dadurch erreichen, daß ein relativ hochfrequenter stabiler bzw. quarzstabiler freilaufender Takt (z.B. 20MHz) verwendet wird, dessen Frequenz größer ist als die Grundtaktfrequenz (z.B. 5MHz) und dessen Frequenz ein Vielfaches der Grundtaktfrequenz betragen kann und der durch Teilung den Decodertakt erzeugt. Der hierzu notwendige Teiler wird mit den den eigentlichen Daten vorangestellten Run-In-Informationen derart verkoppelt, daß Impulse des freilaufenden Quarzoszillators den Teiler erst dann erreichen, wenn die erste positive oder negative Flanke des ersten Run-In Bits eine Freischaltung initialisiert hat.

Ein von einer Detektionsschaltung der Zeile 23 abgeleiteter Reset-Impuls bringt sowohl die Freischaltung als auch die Teilerschaltung vor dem Auftreten der Run-In-Informationen in einen definierten Startzustand.

Die Phasenlage des freilaufenden Taktes des Quarzoszillators kann zur positiven Flanke des ersten Run-In-Bits beliebig sein, aber darf nur eine maximale Abweichung zu diesem Run-In-Bit von ±1/2 Taktperiode des Quarzoszillatortaktes aufweisen. Durch das Setzen der Teilerschaltung in einen definierten Ausgangszustand wird erreicht, daß diese Maximalabweichung an den Decodertakt weitergegeben wird.

Bei Verwendung eines z.B. 20MHz-Quarzoszillators beträgt somit der maximale zeitliche Versatz zwischen Decodertakt und Daten ±25ns. Das Teilerverhältnis zwischen Quarzfrequenz und Decodertaktfrequenz beträgt 24.

Geringere zeitliche Abweichungen zwischen Daten und Decodertakt lassen sich prinzipiell durch Verwendung einer höheren Quarzoszillatorfrequenz erreichen. Verbunden damit ist dann ein höheres Teilungsverhältnis.

Durch die Synchronisation des Decodertaktes auf das Datenpaket innerhalb der Zeile 23 wird erreicht, daß die Decodierung der Daten auch bei auf Heim-Videorecordern aufgezeichneten WSS-Informationen gewährleistet ist. Die mit Jitter behafteten Wiedergabesignale von Videorecordern werden dennoch einwandfrei verarbeitet, da der innerhalb einer Zeile auftretende Jitter das zeitliche Decodierungsfenster von ±1/2 Decodertaktperiode nicht überschreitet.

Das erfindungsgemäße Verfahren dient zur Decodierung und Messung von Statusbit-Informationen (WSS = Wide Screen Signalling) bei der Übertragung und Aufzeichnung von Fernsehsignalen. Hierbei können insbesondere jitterbehaftete Signale verarbeitet werden, die bei der Wiedergabe von auf Heim-Videorecordern aufgezeichneten Signalen auftreten. Weiterhin wird aus der erfindungsgemäßen Decodertakt-Rückgewinnung ein Meßverfahren abgeleitet, das eine Aussage über die Decodierfähigkeit von übertragenen und/ oder aufgezeichneten WSS-Signalen erlaubt.

Zur Zeit werden WSS-Informationen im PALplus-Standard angewendet und zur Ausstrahlung gebracht. Der ETSI-Draft wurde im Hinblick auf 625-zeilige PAL- und SECAM-Systeme entwickelt. Die Erfindung kann jedoch auch bei anderen Fernsehstandards angewendet werden.

Im Prinzip besteht daß erfindungsgemäße Verfahren darin, daß zur Erzeugung des Decodierungs-Taktes von digitalen Datenelementen, die in einem analogen Signal enthalten sind und deren Grund-Taktfrequenz nicht notwendigerweise phasenstarr an das analoge Signal gekoppelt ist, wobei die Taktfrequenz der Datenelemente niedriger ist als die Grund-Taktfrequenz und den Datenelementen Run-In-Datenelemente vorangestellt sind, folgende Schritte durchgeführt werden, wobei:

- aus einem frequenzstabilen freilaufenden Takt mit einer Frequenz, die höher ist als die Grund-Taktfrequenz, wird durch Frequenz-Teilung die Decodierungs-Taktfrequenz für die Datenelemente erzeugt;
- aus einem festgelegten Startzustand heraus werden die Impulse des freilaufenden Taktes in dem Frequenz-Teilungsvorgang erst nach der ersten positiven oder negativen Flanke eines festgelegten - insbesondere des ersten - Run-In-Datenelements berücksichtigt;
- durch die so durchgeführte Frequenz-Teilung wird der Decodierungs-Takt für die Datenelemente erzeugt.

Vorteilhafte Weiterbildungen des erfindungsgemäßen Verfahrens ergeben sich aus den zugehörigen abhängigen Ansprüchen.

Im Prinzip dient die erfindungsgemäße Vorrichtung zur Erzeugung des Decodierungs-Taktes von digitalen Datenelementen, die in einem analogen Signal enthalten sind und deren Grund-Taktfrequenz nicht notwendigerweise phasenstarr an das analoge Signal gekoppelt ist, wobei die Taktfrequenz der Datenelemente niedriger ist als die Grund-Taktfrequenz und den Datenelementen Run-In-Datenelemente vorangestellt sind. Diese Vorrichtung enthält:

- Oszillatormittel, die einen frequenzstabilen freilaufenden Takt erzeugen mit einer Frequenz, die höher ist als die Grund-Taktfrequenz;
- Frequenz-Teilungsmittel, die aus dem freilaufenden Takt den Decodierungs-Takt für die Datenelemente erzeugen, wobei Setz-Mittel jeweils vor Beginn einer Auswertung der Datenelemente einen festgelegten Startzustand für die Frequenz-Teilungsmittel bewirken;
- Tor-Schaltmittel, die bewirken, daß die Impulse des freilaufenden Taktes aus diesem festgelegten Startzustand heraus erst nach der ersten positiven oder negativen Flanke eines festgelegten - insbesondere des ersten - Run-In-Datenelements in den Frequenz-Teilungsmitteln berücksichtigt werden.

Vorteilhafte Weiterbildungen der erfindungsgemäßen Vorrichtung ergeben sich aus den zugehörigen abhängigen Ansprüchen.

Zeichnungen

Anhand der Zeichnungen sind Ausführungs-Beispiele der Erfindung beschrieben. Diese zeigen in:

Fig. 1      bekannte Positionierung der Statusbits in Zeile 23;
Fig. 2      bekannte Biphase-L-Codierung der Statusbits;

Fig. 3    ideale Daten-Takt-Relation;

Fig. 4    bekannte Toleranzen des Datenpaketes der Zeile 23 bei Heim-Videorecorderaufzeichnung;

Fig. 5    Schaltung zur Auswertung der Statusbits über mehrere Vollbilder;

Fig. 6    Ausführungsbeispiel zur Decodertaktgewinnung mit freilaufendem Quarzoszillator;

Fig. 7    detailliertere Schaltung zu Fig. 6;

Fig. 8    zeitliche Lage eines Reset-Impulses;

Fig. 9    Zeitdiagramme des Decodertaktes vor und nach einer Synchronisation;

Fig. 10    WSS-Decodierschaltung;

Fig. 11    Einlesevorgang von Daten;

Fig. 12    Triggersignal für Oszilloskop-Messung;

Fig. 13    Rechteck-Toleranzfenster bei idealer Signalform;

Fig. 14    Toleranzfenster bei realen Signalen;

Fig. 15    Triggersignalerzeugung für oszilloskopische Datenflanken-Messung;

Fig. 16    Datenflanken-Messung an realen Signalen.

Ausführungs-Beispiele

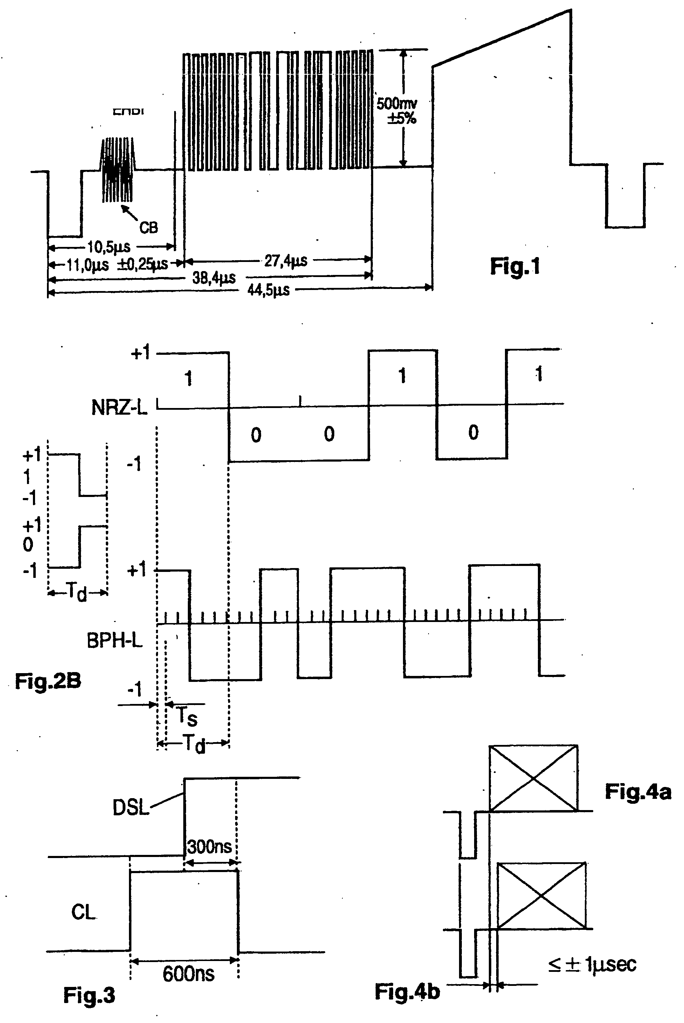

Fig. 1 zeigt die Positionierung der Statusbit-Informationen unter Angabe der spezifizierten Toleranzen gemäß ETSI-Draft. Die Statusbit-Informationen beginnen nach dem Ende EHBI des horizontalen Blanking-Intervalls, welches auch den Farbburst CB enthält.

Fig. 2A zeigt ein Beispiel für den für die Codierung verwendeten Biphase-L-Code BPH-L. Die eigentlichen Dateninformationen, die in ihrer Binärform "0" bzw. "1" zunächst im NRZ-Code NRZ-L vorliegen, werden derart umcodiert, daß eine binäre "1" durch eine negative Flanke (vom positiven in den negativen Bereich) dargestellt wird. Für eine binäre "0" wird eine positive Flanke verwendet, wie in Fig. 2B angedeutet. Eine binäre "1" oder "0" ist jeweils sechs Perioden der Grundtaktfrequenz von 5MHz lang ($T_s$ = 1/(5MHz)= 200ns, $T_d$ = 6*$T_s$ = 1.2µs). Die kennzeichnende Flanke erfolgt in Datenmitte nach 3*$T_s$ = 600ns. Durch diese Codierung werden jetzt auch Flankenübergänge erforderlich, die keine Information tragen, wie man beispielsweise bei der ["0" "0"] - Folge sieht. Die informationslose negative Flanke erfolgt dann zu Beginn eines neuen Datums.

Hieraus wird die erforderliche zeitliche Relation zwischen Decodertakt und Daten ersichtlich, die Fig. 3 wiedergibt. Die ideale Lage der Datenflanken DSL liegt demnach in der Mitte des High-Pegels des Taktes CL. Somit ergibt sich ein zeitliches Decodierfenster von ±300ns.

Fig. 4 zeigt die bekannten Toleranzangaben für den Beginn des Datenpaketes der Zeile 23 bei Aufzeichnung auf Heim-Videorecordern. Demnach wird ein zeitlicher Versatz von ±1µs zwischen Eingangs- und Aufzeichnungssignal gemäß PALplus VCR Working Group Draft toleriert.

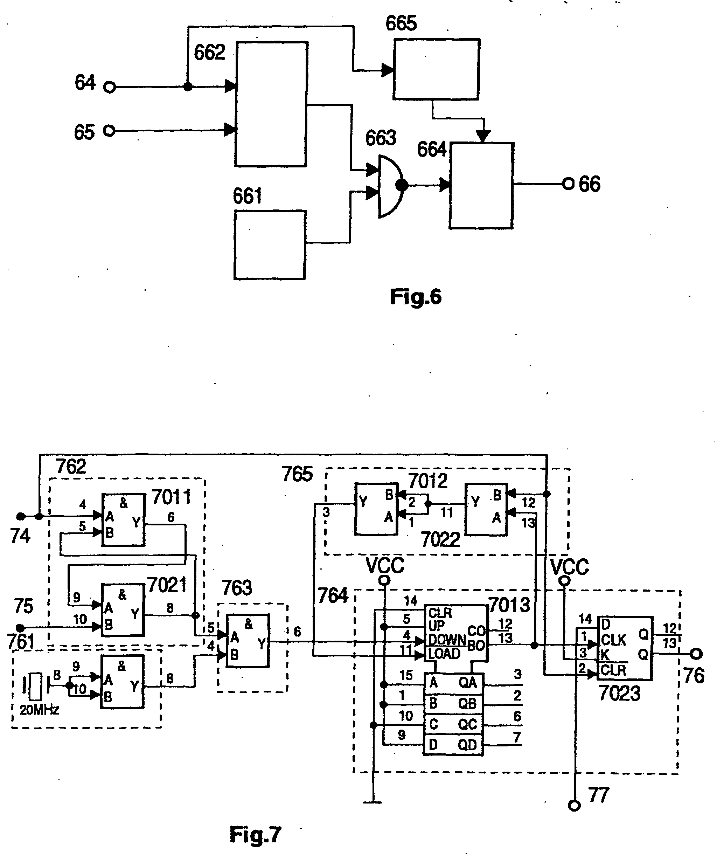

Das erfindungsgemäße Ausführungsbeispiel in Fig. 6 basiert auf einer freilaufenden quarzstabilen Oszillatorfrequenz, über die der Decodertakt von 833.33kHz bereitgestellt wird. Der Decodertakt wird jedoch mit dem Datenpaket der Zeile 23 synchronisiert. Über die Klemme 64 wird ein Reset-Impuls an das R-S-Flipflop 662 gegeben. Gesetzt wird das R-S-Flipflop 662 über Klemme 65, an der das Datenpaket der Zeile 23 anliegt. Über den Ausgang des R-S-Flipflops 662 wird ein NAND-Gatter 663 als Schalter betrieben. Erscheint das erste Bit der Run-In-Information an Klemme 65, werden über das NAND-Gatter 663 Impulse des Quarzoszillators 661 an die Teilerschaltung 664 durchgelassen. Der Quarzoszillator 661 kann beispielsweise eine Frequenz von 20MHz aufweisen. Die Teilerschaltung 664 wird über eine Logikschaltung 665, die ebenfalls von dem Reset-Impuls an Klemme 64 gesteuert wird, in einen definierten Zustand versetzt. Die Logikschaltung 665 bewirkt, daß der Ausgang 66 der Teilerschaltung 664 vor Auftreten des ersten Run-In-Bits auf den Logikpegel "High" gesetzt wird. Die Ausführung der Logikschaltung 665 ist von den in der Teilerschaltung 664 verwendeten Bausteinen abhängig.

Fig. 7 zeigt ein Ausführungsbeispiel der Fig. 6, wenn die Teilerschaltung 764 (entspricht 664 aus Fig. 6) aus einem synchronen programmierbaren 4 bit-Vorwärts/Rückwärtszähler 7013 und einem J-K-Flipflop 7023 aufgebaut wird. Bei einer Taktfrequenz von 20MHz des Quarzoszillators 761, wobei der Quarz z.B. an ein Gatter vom Typ 74HC132 angeschlossen ist, muß das Teilungsverhältnis 24 betragen. Der 4 Bit-Zähler 7013 wurde als Baustein 74HCT193 ausgeführt und wird als Rückwärtszähler mit dem Teilerfaktor 12 betrieben. Das J-K-Flipflop wird durch den Baustein 74HCT73 gebildet und teilt im Toggle-Betrieb durch den Faktor 2. Durch die Teilung mit dem Faktor 2 wird für den Decodertakt an Ausgangs-Klemme 76 (entspricht Klemme 66 in Fig. 6) ein 2:1 Tastverhältnis (50% duty cycle) erreicht, das zum Erreichen der Daten-Takt-Relation gemäß Fig. 3 erforderlich ist. Bei dem beschriebenen Aufbau der Teilerschaltung 764 besteht dann die Logikschaltung 765 (entspricht 665 in Fig. 6) aus zwei NAND-Gattern 7012 und 7022 vom Typ 74HCT00, wobei das NAND-Gatter 7012 durch Zusammenschalten beider Eingänge als Inverter fungiert. NAND-Gatter 7022 wird durch den Reset-Impuls an Klemme 74 und den Ausgang (BO=Borrow) des 4 Bit-Zählers 7013 betrieben. Der Reset-Impuls arbeitet direkt auf den CLEAR-Eingang des J-K-Flipflops 7023. Der Ausgang des als Inverter fungierenden NAND-Gatters 7012 betätigt den LOAD-Eingang des 4 Bit-Zählers 7013.

Über die Klemme 77 wird das J-K-Flipflop 7023 für die Teilung während der Statusbits vorbereitet. Nach Auftreten des Reset-Impulses wird die Klemme 77 mit "Low"-Pegel belegt. Dadurch ist das J-K-Flipflop 7023 mit RESET-Bedingungen (J=O, K=I) codiert und gibt an Klemme 76 einen "High"-Pegel aus. Treten in der Zeile 23 Run-In-Informationen auf, d.h. ist ein Datenpaket in der Zeile 23 präsent, ändert sich der Pegel an Klemme 77 auf "High". Das J-K-Flipflop 7023 ist jetzt für den Toggle-Betrieb codiert und teilungsbereit.

Das R-S-Flipflop 762 ist aus den beiden NAND-Gattern 7011 und 7021 vom Typ 74HCT00 aufgebaut. Über die Klemme 74 (entspricht Klemme 64 in Fig. 6) wird ein Reset-Impuls zugeführt, der das R-S-Flipflop in einen definierten Zustand versetzt. Erscheint an Klemme 75 (entspricht Klemme 65 in Fig. 6) das erste Bit der Run-In-Information, kippt das NAND-Gatter 7021 in seinen inversen logischen Zustand um und schaltet ein weiteres als Schalter bzw. zeitliches Tor oder Fensterfunktion fungierendes NAND-Gatter 763 frei. NAND-Gatter 763 läßt dann Impulse des Quarzoszillators 761 an die Teilerschaltung 764 durch.

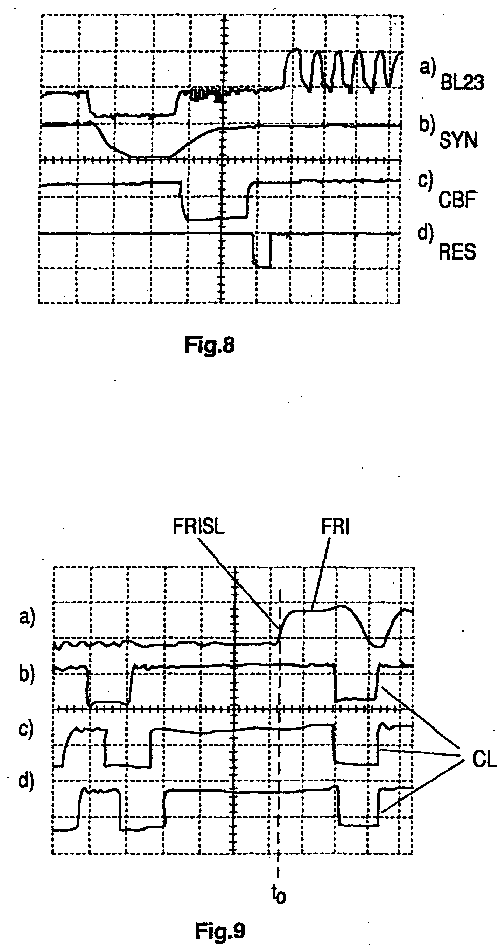

Fig. 8 zeigt Form und zeitliche Lage des Reset-Impulses, der an Klemme 64 bzw. 74 der Fig. 6 bzw. Fig. 7 eingespeist wird. Der Reset-Impuls erscheint in Zeile 23 vor Auftreten des ersten Run-In-Bits. Der Impuls kann mit Hilfe des Sync-Bausteins LM1881 aus dem FBAS-Signal abgeleitet werden.

Fig. 8a zeigt ein FBAS-Signal BL23 zu Beginn der Zeile 23 mit den ersten Bits der Run-In-Information. Der Baustein LM1881 separiert das Sync-Signal SYN (Fig. 8b) und liefert ein Burst-Flag-Signal CBF, das die zeitliche Lage des Farbbursts im FBAS-Signal anzeigt (Fig. 8c). Von diesem Signal wird der Reset-Impuls RES beispielsweise über ein Monoflop abgeleitet und hat dann die in Fig. 8d dargestellte zeitliche Lage und Form.

Fig. 9 zeigt die Synchronisation der Decodertaktfrequenz von 833.33kHz nach dem Ausführungsbeispiel von Fig. 6. Dargestellt sind in Fig. 9a das erste synchronisierende Run-In-Bit FRI des Datenpaketes der Zeile 23 und in den Fig. 9b bis 9d die Phasenlagen der Decodertaktfrequenz CL zu diesem Run-In-Bit vor und nach dem Zeitpunkt $t_o$ der Synchronisation. Vor der Synchronisation hat die Decodertaktfrequenz beliebige Phasenlagen zum Datenpaket der Zeile 23, wie die Fig. 9b bis 9d zeigen. Nach dem Synchronisationszeitpunkt $t_o$ hat die erste fallende Flanke des Decodertaktes zur steigenden Flanke FRISL des ersten Run-In-Bits einen festen Phasenbezug, der maximal um ±1/2 Periode der den Decodertakt generierenden Quarzoszillatorfrequenz variiert. Für das Beispiel einer Oszillatorfrequenz von 20MHz des Quarzoszillators 661, 761 beträgt die maximale Abweichung ±25ns.

Damit wird eine konstante Daten-Takt-Relation gewährleistet. Der Reset-Impuls und die Logik 665, 765 sind so gewählt, daß die auf den Run-In und den Startcode folgenden informationstragenden Datenflanken genau in der Mitte des Decodierfensters liegen, das nach Fig. 3 durch den "High"-Pegel des Decodertaktes gebildet wird. Dies ist möglich, da der Bezug zur Decodierung der informationstragenden Datenflanken direkt aus dem Datenpaket, d.h. aus der ersten Flanke der Run-In-Information gewonnen wird.

Da die Datensignale auf einem 5MHz-Takt basieren, der nach ETSI-Draft nur um 1/10000 variieren darf, ergibt sich eine maximale zeitliche Änderung des gesamten Datenpaketes von nur 2.74ns, wodurch die zeitliche Position der Datenflanken - gemessen von der ersten Flanke des ersten Run-In-Bits - genau vorherbestimmbar ist.

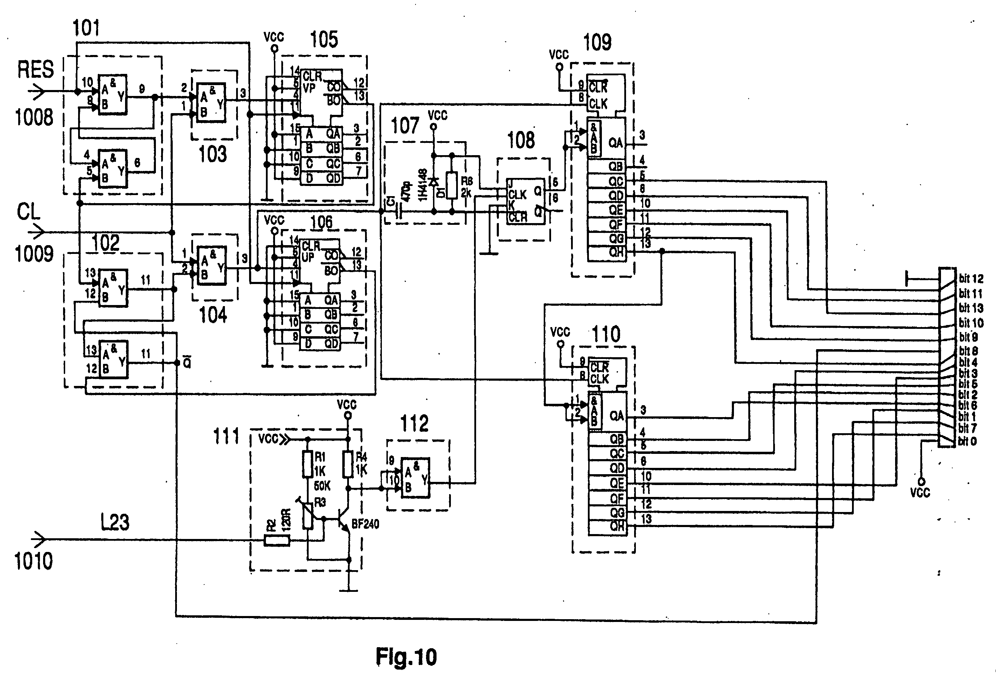

Fig. 10 zeigt die praktische Ausführung einer Decodiervorrichtung, die die übertragenen Statusbits mittels der nach Fig. 6 oder Fig. 7 erzeugten Decodertaktfrequenz in Schieberegister einliest und in paralleler Form ausgibt.

Die 14 Statusbits der Zeile 23 werden in zwei kaskadierte 8 Bit-Schieberegister 109 und 110 vom Typ 74HCT164 eingelesen. Da nur die eigentlichen Statusbits von Interesse sind, werden Run-In-Informationen und Startcode übergangen, indem diese Takte ausgezählt werden. Dazu werden die beiden R-S-Flipflops 101 und 102, zwei Torschaltungen 103 und 104 sowie die beiden Zähler 105 und 106 vom Typ 74HCT193 eingesetzt. Die Schaltungen 101 bis 104 sind z.B. aus Gattern vom Typ 74HCT00 aufgebaut. Über den Reset-Impuls (RES, Fig. 8d) an Klemme 1008 werden diese beiden Zähler auf festgesetzte Werte geladen. Zähler 105 arbeitet als Rückwärtszähler und wird auf den Startwert 9 geladen. Dieser Startwert entspricht der Anzahl von Taktperioden von der ersten Run-In-Flanke bis zur Position des ersten Decodierfensters zur Decodierung der ersten Datenflanke. Das R-S-Flipflop 101 wird über den Reset-Impuls an Klemme 1008 gesetzt und läßt über die Torschaltung 103 Impulse der Decodertaktfrequenz CL, die an Klemme 1009 anliegt, an den Zähler 105 durch. Bei Erreichen des negativen Überlaufs des Zählers 105 wird durch das Zählerausgangssignal (Borrow) das R-S-Flipflop 101 zurückgesetzt, so daß keine weiteren Taktimpulse den Zähler 105 erreichen. Mit diesem Signal (Borrow) wird gleichzeitig ein zweites R-S-Flipflop 102 gesetzt, das jetzt über die Torschaltung 104 Impulse der Decodertaktfrequenz an den Statusbit-Zähler 106 durchschaltet. Dieser ebenfalls als Rückwärtszähler ausgeführte Zähler 106 wurde über den Reset-Impuls auf den Startwert 16 geladen. Dieser Statusbit-Zähler 106 sorgt dafür, daß die Statusbits eingelesen und an das Ende der beiden kaskadierten Schieberegister 109 und 110 durchgeschoben werden. Dazu werden hinter der Torschaltung 104 die Decodertaktimpulse abgegriffen und den beiden Schieberegistern 109 und 110 zugeführt. Der Überlauf des Statusbit-Zählers 106 setzt das R-S-Flipflop 102 zurück und die Daten bleiben bis zur nächsten Zeile 23 in den Schieberegistern gespeichert. Der invertierte Q-Ausgang Q des R-S-Flipflops 102 dient gleichzeitig als Decoder-Stop-Flag und signalisiert mit "Low"-Pegel die Aktivität des Decodiervorganges. Es wird also die Zeit angezeigt, in der die Statusbits in den Schieberegistern weitergeschoben werden und daher keine definierte Position haben. Während dieser Zeit stehen die Statusbits für eine weitere Verarbeitung nicht zur Verfügung.

Die Daten der Zeile 23 werden über ein J-K-Flipflop 108 vom Typ 74HCT107 in das Schieberegister 109 geladen. Dazu werden die Daten der Zeile 23 zunächst auf verarbeitbare Pegel, in diesem Fall TTL-Pegel, gebracht. Das an Klemme 1010 anliegende Zeile 23-Signal L23 wird in einem Verstärker 111 zunächst derart verstärkt, daß ein nachgeschalteter Amplitudenentscheider (Schmitt-Trigger) 112 vom Typ 74HCT132 definierte "0" und "1" Zustände mit TTL-Pegeln detektieren kann.

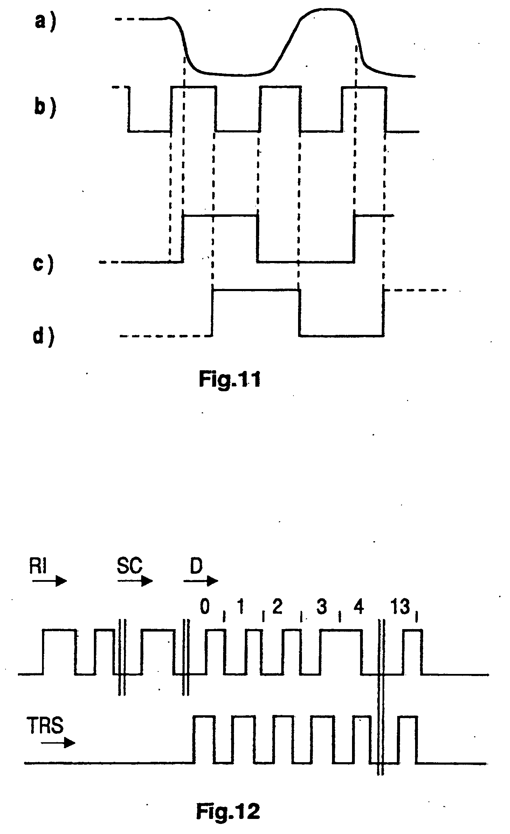

Der Einlesevorgang der Daten in das Schieberegister 109 wird durch Fig. 11 verdeutlicht. Die Daten am Ausgang des Amplitudenentscheiders 112 arbeiten als Taktsignal für das J-K-Flipflop 108. Dieses Flipflop wird über einen Pulsformer 107, der mit dem Decodertakt CL angesprochen wird, gesetzt. Bei Auftreten einer positiven Flanke im Decodertakt wird über den Pulsformer 107 das J-K-Flipflop 108 an seinem Ausgang auf "Low"-Pegel gesetzt. Das Flipflop 108 arbeitet im Toggle-Betrieb und ändert bei jeder auftretenden negativen Flanke an seinem Clock-Eingang den Zustand seines Ausgangssignals. Tritt eine negative Flanke in den am Clock-Eingang des Flipflops 108 liegenden Daten der Zeile 23 auf (Fig. lla), geht das Flipflop in den "High"-Zustand, wie die Fig. 11c zeigt. Eine positive Flanke in den Daten entsprechend einer "0" gemäß der Biphase-L-Codierung wird vom Flipflop 108 ignoriert, da es negativ flankengetriggert arbeitet. Die "0" erscheint jedoch mit der folgenden positiven Taktflanke des Decodertaktes nach Fig. 11b und Fig. 11c am Ausgang des J-K-Flipflops 108. Die Ausgangssignale des Flipflops 108 werden mit jeder negativen Flanke des Decodertaktes, der ebenfalls als Takt für die Schieberegister 109 und 110 fungiert, in das Schieberegister 109 übernommen. Fig. 11d stellt den Schreibvorgang in das Schieberegister dar.

Die übernommenen Daten bleiben nach Ablauf des Statusbitzählers 106 in den Schieberegistern, bis bei Auftreten der nächsten Zeile 23 der gesamte Decodiervorgang neu initialisiert wird. Am Ausgang der Schieberegister stehen die 14 Statusbits (Bit 0 bis Bit 13) zur weiteren Verarbeitung zur Verfügung.

Für die meßtechnische Überprüfung der Decodierfähigkeit der übertragenen Daten kann eine Meßmethode angewendet werden, die den Augendiagramm-Messungen bei digitalen Signalen ähnelt. Allerdings darf nur der Zeitraum zur Darstellung kommen, in dem die relevanten Daten auftreten. Fig. 12 zeigt ein für eine derartige Darstellung geeignetes Triggersignal TRS. Dieses Signal besteht aus dem Decodertaktsignal, das durch logische UND-Verknüpfung mit einer Fensterfunktion, die während des Auftretens der Daten D z.B. ein "High"-Signal abgibt, auf den interessierenden Zeitraum beschränkt wird, wodurch die Run-In-Daten RI und die Startcode-Daten SC ausgeblendet werden.

Eine erste erfindungsgemäße Möglichkeit zur meßtechnischen Erfassung der Qualität übertragener Daten basiert auf der Darstellung von Lissajous-Figuren. Das Datensignal wird bei dieser Messung nach dem Verstärker 111 der Fig. 10 mit auf z.B. 5V verstärkter Amplitude abgegriffen. Die Daten werden zur Y-Ablenkung eines Oszilloskops benutzt. Als X-Ablenkung dient das Signal nach Fig. 12. Die Idealkonstellation von Daten und Takt ergibt somit ein Quadrat mit 5V Kantenlänge. Da die Signalform von Daten und Takt von der idealen Rechteckform abweicht, verändert sich auch die Darstellung. Um das Toleranzfenster, das bei der Messung entsteht, zu definieren, sollten die typischen Eigenarten des Schaltungsaufbaus und der verwendeten Bausteine (z.B. TTL-Bausteine) berücksichtigt werden. Für einen Schaltungsaufbau nach Fig. 10 bedeutet dies, daß der analoge Pegel des Taktes mindestens z.B. 2V erreicht haben muß, bevor Datenflanken ausgewertet werden. Nicht informationstragende Datenflanken dürfen nur dann auftreten, wenn der Takt einen Pegel von weniger als z.B. 800mV aufweist.

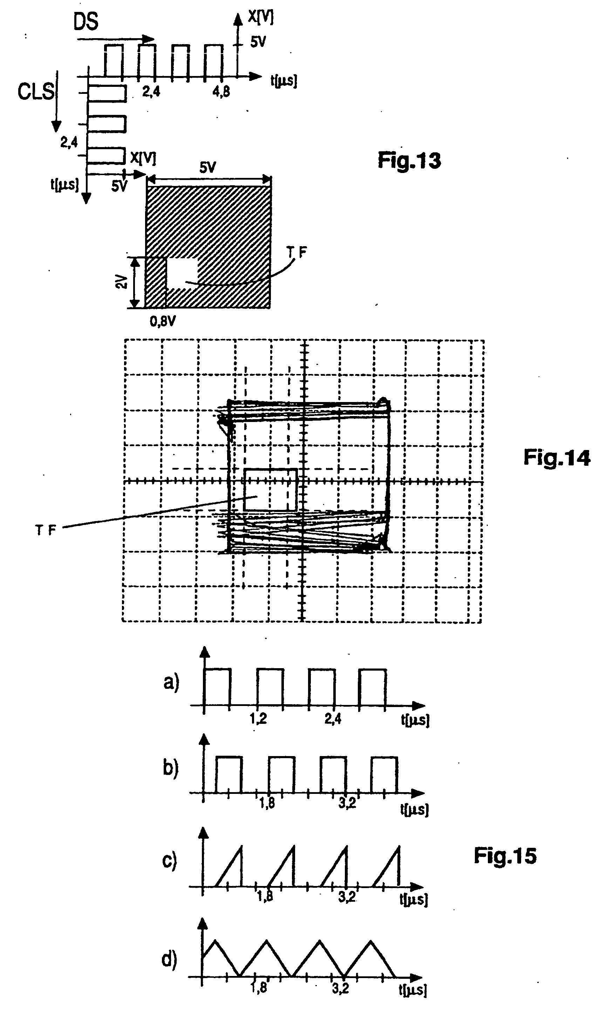

Fig. 13 zeigt das Datensignal DS und das Taktsignal CLS mit idealer Signalform und mit dem in X-Y-Darstellung erzeugten rechteckigen Toleranzfenster TF.

Fig. 14 gibt ein reales Meßdiagramm anhand eines auf einem Heim-Videorecorder aufgezeichneten Signals mit dem Toleranzfenster TF wieder.

Eine weitere erfindungsgemäße meßtechnische Darstellung wird durch ein Triggersignal für eine oszilloskopische X-Y-Darstellung durch Fig. 15c und Fig. 15d angegeben.

Fig. 15a zeigt zunächst das Datensignal DS, zu dem das Decoder-Taktsignal CLS der Fig. 15b den erforderlichen Phasenversatz aufweist, so daß informationstragende Datenflanken während des "High"-Pegels des Decodertaktes erscheinen. Wird nun während dieses "High"-Pegels ein Rampensignal gemäß Fig. 15c erzeugt und zur X-Ablenkung eines Oszilloskops eingesetzt, werden die relevanten Datenflanken (Daten dienen weiterhin der Y-Ablenkung) auf dem Oszilloskop übereinandergeschrieben. In dem Decodierfenster von 600ns, das in X-Richtung auf dem Oszilloskop geschrieben wird, werden nun die Flanken sichtbar.

Fig. 15d zeigt das Dreiecksignal "X-Ablenkung&Triggersignal".

Zu einer ähnlichen Darstellung gelangt man, wenn ein Dreiecksignal nach Fig. 15d zur X-Ablenkung eingesetzt wird. Jetzt werden auch die nicht informationstragenden Flanken im Datensignal miterfaßt. Für diese Flanken gelten die gleichen amplitudenmäßigen und zeitlichen Bedingungen wie für die Flanken mit Information, damit keine Fehldecodierung auftritt. Prinzipiell kann auch ein Dreieckssignal mit 180° Phasenlage zu der Darstellung in Fig. 15d verwendet werden. Der Unterschied besteht lediglich in der Schreibrichtung fallender und steigender Flanken auf dem Oszilloskop.

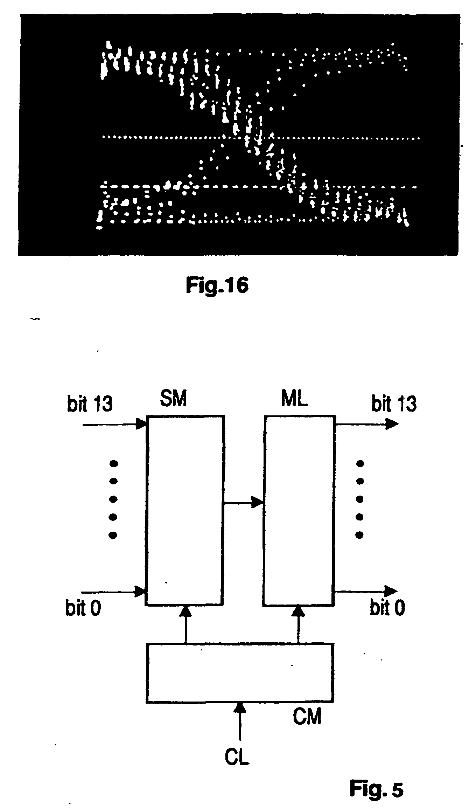

Fig. 16 zeigt eine entsprechende Messung mit einer X-Ablenkung gemäß Fig. 15d eines auf einem Heim-Videorecorder aufgezeichneten Signals.

Um die Zuverlässigkeit der decodierten WSS-Bits weiter zu erhöhen, kann in einem Decoder z.

B. jedes dieser Bits über mehrere, z.B. M=3 oder M=16, Vollbilder, ausgewertet werden mittels einer Speicherung und entweder einer anschließenden Majoritätsentscheidung für das entsprechende Bit oder einer anschließenden Null-Fehler-Entscheidung, die ein Bit nur als gültig anerkennt, wenn über die M Vollbilder kein entsprechendes Bit oder keines der WSS-Bits fehlerhaft war. Vorteilhaft wird diese Operation mit einer entsprechenden Operation mit übertragenen bzw. aufgezeichneten Teletext-Daten (Videotext), insbesondere den VPS-Daten (Video Programm System), kombiniert.

Die Schaltung in Fig. 5 dient zur Auswertung der Statusbits Bit 0 ... Bit 13 über mehrere Vollbilder. Diese Schaltung kann sich an einen Statusbit-Decoder gemäß Fig. 10 anschließen. Die ankommenden jeweiligen Statusbits werden in Speichermitteln SM, z.B. in Schieberegistern oder in einem RAM, über jeweils mehrere Vollbilder gespeichert und gemeinsam in der Schaltung ML ausgewertet. Dies kann, wie oben beschrieben, mittels einer Majoritätsentscheidung oder einer Null-Fehler-Entscheidung geschehen. Die Schaltungen SM und ML werden von einer Kontrolleinheit CM gesteuert. CM kann beispielsweise mit dem Decoder-Takt CL angesteuert werden.

Die Erfindung kann z.B. in PALplus-Videorecordern, PALplus-Fernsehempfängern, PALplus-Meßgeräten, entsprechenden Geräten für andere Fernsehnormen oder in Bildplatten angewendet werden.

Die Erfindung kann ebenfalls für die Decodierung von Teletext-Daten oder anderen digitalen Signalen angewendet werden.

Die Signale können dabei z.B. terrestrisch oder über Satellit oder über leitungsgebundene Netze übertragen worden sein.

Tests haben gezeigt, daß die erfindungsgemäße Decodierung bis zu einem S/N von -22dB funktioniert, wo die Bildqualität bereits nicht mehr akzeptabel ist.

**Patentansprüche**

1. Verfahren zur Erzeugung des Decodierungs-Taktes (CL, CLS) von digitalen WSS-Datenelementen (D, DS), die in einem analogen Fernsehsignal enthalten sind und deren Grund-Taktfrequenz ($1/T_s$) nicht notwendigerweise phasenstarr an das analoge Fernsehsignal gekoppelt ist, wobei die Taktfrequenz ($1/T_d$) der Datenelemente niedriger ist als die Grund-Taktfrequenz und den Datenelementen Run-In-Datenelemente (RI) vorangestellt sind, **gekennzeichnet durch**:

   - aus einem frequenzstabilen freilaufenden Takt (661, 761) mit einer Frequenz, die höher ist als die Grund-Taktfrequenz, wird **durch** Frequenz-Teilung (664, 764) die Decodierungs-Taktfrequenz für die Datenelemente erzeugt;
   - aus einem festgelegten Startzustand heraus

($t_0$) werden die Impulse (FRCL) des freilaufenden Taktes in dem Frequenz-Teilungsvorgang erst nach der ersten positiven oder negativen Flanke (FRISL) eines festgelegten - insbesondere des ersten - Run-In-Datenelements (FRI) berücksichtigt (663, 763);
   - **durch** die so durchgeführte Frequenz-Teilung wird der Decodierungs-Takt (CL, CLS) für die Datenelemente erzeugt.

2. Verfahren nach Anspruch 1, wobei sich die nicht notwendigerweise phasenstarre Koppelung auf die Zeilenfrequenz des Fernsehsignals bezieht.

3. Verfahren nach Anspruch 1 oder 2, wobei zum Erreichen des festgelegten Startzustandes die zeitliche Lage des Farbbursts ermittelt wird.

4. Verfahren nach einem der Ansprüche 1 bis 3, wobei die maximale Phasen-Abweichung des Grund-Taktes zu dem festgelegten Run-In-Datenelement (FRI) ±1/2 Periode der Grund-Taktfrequenz beträgt.

5. Verfahren nach einem der Ansprüche 1 bis 4, wobei der Logikpegel von decodierten Datenelementen jeweils über mehrere Vollbilder ausgewertet (ML) und daraus letztlich bestimmt wird, insbesondere mittels einer Majoritäts-Entscheidung.

6. Vorrichtung zur Erzeugung des Decodierungs-Taktes (CL, CLS) von digitalen WSS-Datenelementen (D, DS), die in einem analogen Fernsehsignal enthalten sind und deren Grund-Taktfrequenz ($1/T_s$) nicht notwendigerweise phasenstarr an das analoge Fernsehsignal gekoppelt ist, wobei die Taktfrequenz ($1/T_d$) der Datenelemente niedriger ist als die Grund-Taktfrequenz und den Datenelementen Run-In-Datenelemente (RI) vorangestellt sind, versehen mit:

   - Oszillatormitteln (661, 761), die einen frequenzstabilen freilaufenden Takt erzeugen mit einer Frequenz, die höher ist als die Grund-Taktfrequenz;
   - Frequenz-Teilungsmitteln (664, 764), die aus dem freilaufenden Takt den Decodierungs-Takt (CL, CLS) für die Datenelemente erzeugen, wobei Setz-Mittel (665, 765) jeweils vor Beginn einer Auswertung der Datenelemente einen festgelegten Startzustand für die Frequenz-Teilungsmittel bewirken;
   - Tor-Schaltmitteln (663, 763) die bewirken, daß die Impulse (FRCL) des freilaufenden Taktes aus diesem festgelegten Startzustand heraus erst nach ($t_0$) der ersten positiven oder negativen Flanke (FRISL) eines festgelegten - insbesondere des ersten - Run-In-Datenelements (FRI) in den Frequenz-Teilungsmitteln berück-

sichtig werden.

**7.** Vorrichtung nach Anspruch 6, wobei sich die nicht notwendigerweise phasenstarre Koppelung auf die Zeilenfrequenz des Fernsehsignals bezieht.

**8.** Vorrichtung nach Anspruch 6 oder 7, wobei zum Erreichen des festgelegten Startzustandes die zeitliche Lage des Farbbursts ermittelt wird.

**9.** Vorrichtung nach einem der Ansprüche 6 bis 8, wobei die maximale Phasen-Abweichung des Grund-Taktes zu dem festgelegten Run-In-Datenelement (FRI) ±1/2 Periode der Grund-Taktfrequenz beträgt.

**10.** Vorrichtung nach einem der Ansprüche 6 bis 9, wobei der Logikpegel von decodierten Datenelementen jeweils über mehrere Vollbilder ausgewertet (ML) und daraus letztlich bestimmt wird, insbesondere mittels einer Majoritäts-Entscheidung.

**Claims**

**1.** Method for producing the decoding clock (CL, CLS) of digital WSS-data elements (D, DS) which are contained in an analogue video signal and whose basic clock frequency ($1/T_s$) is not necessarily coupled in a phase-locked manner to the analogue video signal, the clock frequency ($1/T_d$) of the data elements being lower than the basic clock frequency, and run-in data elements (RI) being positioned in front of the data elements, **characterized by**:

- the decoding clock frequency for the data elements is produced by frequency division (664, 764) from a stable-frequency free-running clock (661, 761) at a frequency which is higher than the basic clock frequency;
- commencing from a defined start condition ($t_0$), the pulses (FRCL) of the free-running clock are not taken into account (663, 763) in the frequency division process until after the first positive or negative flank (FRISL) of a defined - in particular the first - run-in data element (FRI);
- the decoding clock (CL, CLS) for the data elements is produced by the frequency division carried out in this way.

**2.** Method according to Claim 1, wherein said not necessarily coupling in a phase-locked manner is related to the line frequency of the video signal.

**3.** Method according to Claim 1 or 2, wherein for reaching the predetermined start condition the temporal position of the color burst is evaluated.

**4.** Method according to 1 or more of claims 1 to 3, wherein the maximum phase error of the basic clock with respect to the predetermined run-in data element (FRI) amounts to ±1/2 period of the basic clock frequency.

**5.** Method according to one or more of Claims 1 to 4, wherein the logic level of decoded data elements in each case is evaluated over a plurality of frames, in particular by means of a majority decision.

**6.** Device for producing the decoding clock (CL, CLS) of digital WSS-data elements (D, DS) which are contained in an analogue video signal, and whose basic clock frequency ($1/T_s$) is not necessarily coupled in phase-locked manner to the analogue video signal, the clock frequency ($1/T_d$) of the data elements being lower than the basic clock frequency, and run-in data elements (RE) being positioned in front of the data elements, provided with:

- oscillator means (661, 761) which produce a stable-frequency free-running clock at a frequency which is higher than the basic clock frequency;
- frequency division means (664, 764) which produce from the free-running clock the decoding clock (CL, CLS) for the data elements, whereby setting means (665, 765) in each case produce a predetermined start condition for the frequency division means before the commencement of an evaluation of the data elements;
- gate switching means (663, 763) which act such that the pulses (FRCL) of the free-running clock are not taken into account in the frequency division means commencing from this predetermined start condition, until after ($t_0$) the first positive or negative flank (FRISL) of a predetermined - in particular the first - run-in data element (FRI).

**7.** Device according to claim 6, wherein said not necessarily coupling in a phase-locked manner is related to the line frequency of the video signal.

**8.** Device according to claim 6 or 7, wherein for reaching the predetermined start condition the temporal position of the color burst is evaluated.

**9.** Device according to one or more of claims 6 to 8, wherein the maximum phase error of the basic clock with respect to the predetermined run-in data element (FRI) amounts to ±1/2 period of the basic clock frequency.

**10.** Device according to one or more of claims 6 to 9, wherein the logic level of decoded data elements in each case is evaluated over a plurality of frames, in particuler by means of a majority decision.

**Revendications**

1.  Procédé pour engendrer le rythme de décodage (CL, CLS) d'éléments de données WSS numériques (D, DS) contenus dans un signal de télévision analogique et dont la fréquence de rythme de base $(1/T_s)$ n'est pas nécessairement couplée verrouillée en phase au signal de télévision analogique, où la fréquence de rythme $(1/T_d)$ des éléments de données est inférieure à la fréquence de rythme de base et où des éléments de données sont placés avant les éléments de données de début (RI), **caractérisé en ce que** :

    -   à partir d'un rythme libre stable en fréquence (661, 761) dont la fréquence est supérieure à la fréquence de rythme de base, la fréquence de rythme de décodage pour les éléments de données est engendrée par division de fréquence (664, 764) ;

    -   à partir d'un état de départ fixé $(t_0)$, les impulsions (FRCL) du rythme libre sont prises en compte dans le processus de division de fréquence uniquement après le premier flanc positif ou négatif (FRISL) d'un élément de données de début (FRI) fixé, en particulier le premier (663, 763) ;

    -   le rythme de décodage (CL, CLS) pour les éléments de données est engendré via la division de fréquence ainsi réalisée.

2.  Procédé selon la revendication 1, dans lequel le couplage qui n'est pas nécessairement verrouillé en phase concerne la fréquence de ligne du signal de télévision.

3.  Procédé selon la revendication 1 ou 2, dans lequel la position temporelle du signal de synchronisation de couleur est déterminée pour atteindre l'état de départ fixé.

4.  Procédé selon l'une des revendications 1 à 3, dans lequel la différence de phase maximale du rythme de base par rapport à l'élément de données de début (FRI) correspond à $\pm 1/2$ période de la fréquence de rythme de base.

5.  Procédé selon l'une des revendications 1 à 4, dans lequel le niveau logique d'éléments de données décodés est évalué à chaque fois via plusieurs images complètes (ML) et déterminé finalement à partir de celles-ci, notamment à l'aide d'une décision majoritaire.

6.  Dispositif pour engendrer le rythme de décodage d'éléments (CL, CS) de données WSS numériques (D, DS) contenus dans un signal de télévision analogique et dont la fréquence de rythme de base $(1/T_s)$ n'est pas nécessairement couplée verrouillée en phase au signal de télévision analogique, dans lequel la fréquence de rythme $(1/T_d)$ des éléments de données est inférieure à la fréquence de rythme de base et des éléments de données de début (RI) sont placés avant les éléments de données, muni de :

    -   dispositifs d'oscillation (661, 761) qui produisent un rythme libre stable en fréquence à une fréquence supérieure à la fréquence de rythme de base ;

    -   dispositifs de division de fréquence (664, 764) qui produisent à partir du rythme libre le rythme de décodage (CL, CLS) pour les éléments de données, où des dispositifs de positionnement (665, 765) produisent à chaque début d'évaluation d'éléments de données un état de début fixé pour les dispositifs de division de fréquence ;

    -   dispositifs de commutation de porte (663, 763) qui font en sorte que les impulsions (FRCL) du rythme libre à partir de cet état de départ fixé soient prises en compte dans le processus de division de fréquence uniquement après $(t_0)$ le premier flanc positif ou négatif (FRISL) d'un élément de données de début (FRI) fixé, en particulier le premier.

7.  Dispositif selon la revendication 6, dans lequel le couplage qui n'est pas nécessairement verrouillé en phase concerne la fréquence de ligne du signal de télévision.

8.  Dispositif selon la revendication 6 ou 7, dans lequel la position temporelle du signal de synchronisation de couleur est déterminée pour atteindre l'état de départ fixé.

9.  Dispositif selon l'une des revendications 6 à 8, dans lequel la différence de phase maximale du rythme de base par rapport à l'élément de données de début (FRI) correspond à $\pm 1/2$ période de la fréquence de rythme de base.

10. Dispositif selon l'une des revendications 6 à 9, dans lequel le niveau logique d'éléments de données décodés est évalué à chaque fois via plusieurs images complètes (ML) et déterminé finalement à partir de celles-ci, notamment à l'aide d'une décision majoritaire.

**Fig.1**

**Fig.2B**

NRZ-L

BPH-L

**Fig.3**

DSL

CL

300ns

600ns

**Fig.4a**

**Fig.4b**

$\leq \pm 1\mu sec$

**Fig.6**

**Fig.7**

**Fig.8**

a)
b)
c)
d)

FRISL    FRI

CL

t$_0$

**Fig.9**

Fig.10

a )

b )

c )

d )

**Fig.11**

RI →  SC →  D →

0 , 1 , 2 , 3 , 4 , 13 ,

TRS →

**Fig.12**

**Fig.13**

**Fig.14**

**Fig.15**

a)

b)

c)

d)

**Fig.16**

**Fig. 5**